# EUROPÄISCHE PATENTSCHRIFT

(11) **EP 2 652 373 B1**
(45) Veröffentlichungstag und Bekanntmachung des Hinweises auf die Patenterteilung: **20.04.2016**
(21) Anmeldenummer: 11782425.0
(22) Anmeldetag: 15.11.2011
(51) Int. Cl.: F16K 27/02, F16K 31/06

(54) **ELEKTROMAGNETVENTIL**
SOLENOID VALVE
ÉLECTROVANNE

(30) Priorität: 17.12.2010 DE 102010055026
(43) Veröffentlichungstag der Anmeldung: 23.10.2013
(73) Patentinhaber: Pierburg GmbH, 41460 Neuss (DE)
(72) Erfinder: SCHNELKER, Franz-Josef, 41470 Neuss (DE); BUSE, Werner, 41564 Kaarst (DE); SADOWSKI, Christoph, 44866 Bochum (DE); LAPPAN, Rolf, 50733 Köln (DE); DOHRMANN, Rolf, 41564 Kaarst (DE); ROMANOWSKI, Lukas, 49090 Osnabrück (DE)
(74) Vertreter: Patentanwälte ter Smitten Eberlein Rütten Partnerschaftsgesellschaft
(86) Internationale Anmeldenummer: PCT/EP2011/070120
(87) Internationale Veröffentlichungsnummer: WO 2012/079888

(56) Entgegenhaltungen:
- DE-A1- 10 252 431
- JP-A- 8 105 563
- US-A- 5 160 116
- US-B1- 6 209 563
- US-B1- 6 321 767

## Beschreibung

Die Erfindung betrifft ein Elektromagnetventil mit einem Gehäuse, in dem eine auf einen Spulenträger gewickelte Spule, eine Anker-Stößel-Anordnung, ein Kern und eine mehrteilige Rückschlussanordnung angeordnet sind, die einen elektromagnetischen Kreis bilden, wobei die Anker-Stößel-Anordnung mindestens ein Ankerteil und ein Stößelteil aufweist und die bewegliche Anker-Stößel-Anordnung über Lagermittel in dem Spulenträger gelagert ist und auf mindestens ein Ventilverschlussglied direkt oder indirekt einwirkt, wobei das Ventilverschlussglied auf mindestens einen, in einer Ventilhülse angeordneten Ventilsitz angreift, wobei das Ankerteil über Lagermittel im Spulenträger gelagert ist und das Stößelteil in der Ventilhülse beweglich angeordnet ist, wobei das Ankerteil und das Stößelteil über eine Steckverbindung miteinander verbindbar sind.

Für Elektromagnetventile sind viele unterschiedliche Anwendungsbereiche in Verbrennungskraftmaschinen bekannt. So werden Elektromagnetventile sowohl in pneumatischen als auch in hydraulischen Kreisen in Fahrzeugen eingesetzt, wie zum Beispiel in Bremsanlagen, Bremssystemen oder auch Einspritzanlagen. Des Weiteren können sie zur Regelung des Druckes bei pneumatischen Stellern verwendet werden oder beispielsweise als Schubumluftventile bei Turboladern. Je nach Einsatzbereich sind diese Elektromagnetventile entweder als Auf-/Zu-Ventile oder aber als Proportionalregelventile ausgeführt.

Ein derartiges, als Druckbegrenzungsventil ausgeführtes Elektromagnetventil ist beispielsweise aus der DE 10 2007 002 465 A1 bekannt. Dieses Druckbegrenzungsventil wird in einer hydraulischen Anlage, insbesondere in einem Hochdruck-Kraftstoffsystem eingesetzt. Das Stößelteil mit dem Ventilverschlussglied ist hierbei auf nicht näher beschriebene Weise mit dem Ankerteil des Elektromagnetventils verbunden. Darüber hinaus sind beispielsweise aus der US 6 209 563 B1 und der JP 8 105 563 A gattungsgemäße Elektromagnetventile bekannt, bei denen das Ankerteil und das Stößelteil über eine Steckverbindung miteinander verbindbar ausgeführt sind.

Insbesondere vor dem Hintergrund einer automatisierten Fertigung von Elektromagnetventilen für verschiedene Anwendungen mit verschiedenen Ventilhülsen und verschiedenen Ventilverschlussgliedern ist ein modulartiger Aufbau des Elektromagnetventils gewünscht, bei dem auf einfache Art und Weise verschiedenartige Stößelteile zum Einsatz gelangen können. Dies ist bei dem Elektromagnetventil gemäß dem Stand der Technik nicht möglich.

Es ist daher Aufgabe der Erfindung, ein Elektromagnetventil bereitzustellen, das den oben aufgezeigten Nachteil vermeidet.

Diese Aufgabe wird durch ein Elektromagnetventil gelöst, bei dem der Spulenträger als Aufnahmebuchse für die Ventilhülse ausgebildet ist, wobei die Ventilhülse zusammen mit dem Stößelteil in die Aufnahmebuchse einsetzbar ist. Durch eine derartige Anordnung ist es auf besonders einfache und damit kostengünstige Weise möglich, ein Elektromagnetventil, das in Modulweise aufgebaut ist, und somit geeignet ist, einen elektromagnetischen Kreis für verschiedene Ventilbauformen vorzusehen, in der Endmontage fertig zu stellen.

In einer vorteilhaften Ausführungsform weist das Ankerteil einen Zapfen und das Stößelteil eine mit dem Zapfen korrespondierende Aussparung auf, der Art, dass eine kraft- oder formschlüssige Verbindung herstellbar ist. Hierdurch ist es möglich, bei der Endmontage durch einen einfachen Aufsteckvorgang das Elektromagnetventil mit seiner spezifischen Ausführungsform fertig zu stellen. Hierbei kann es besonders vorteilhaft sein, wenn die Steckverbindung in Axialrichtung einstellbar ist. Dies ist beispielsweise dadurch möglich, dass der Zapfen eine Rändelung aufweist. Hierdurch kann dann nach Endmontage noch eine Feinjustage vorgenommen werden. In Bezug auf eine besonders einfach und damit kostengünstig durchgeführte Vormontage ist es vorteilhaft, wenn zumindest Teile der Rückschlussanordnung im Spulenträger angeordnet sind. Dadurch, dass ein vom Ankerteil entgegengesetzter Bereich des Kernes einen größeren Durchmesser aufweist als ein dem Ventilverschlussglied entgegengesetzter Bereich des Spulenträgers, ist es möglich, die den elektromagnetischen Kreis bildenden Bauteile des Elektromagnetventils auf besonders einfache Art und Weise vorzumontieren.

In einer besonders vorteilhaften Ausführungsform weist ein Teilbereich des Spulenträgers eine Lagerbuchse für das Ankerteil auf. Auch ist es möglich, dass der Teilbereich des Spulenträgers als Lagerbereich für das Ankerteil ausgebildet ist.

Dabei ist es besonders vorteilhaft, wenn der Spulenträger im Spritzgussverfahren hergestellt ist, wobei der Spulenträger aus einem form- und temperaturstabilen Werkstoff, beispielsweise unter dem Markenzeichen Grivory HT2V 3HLV, oder Grivory XE3881 hergestellt ist.

Ausführungsbeispiele der Erfindung sind in der Zeichnung dargestellt und werden nachfolgend beschrieben.

### Hierbei zeigt:

Figur 1 eine Schnittansicht eines erfindungsgemäßen Elektromagnetventils, und
Figur 2 eine Baugruppenzeichnung für unterschiedlich herzustellende Ausführungen von Elektromagnetventilen.

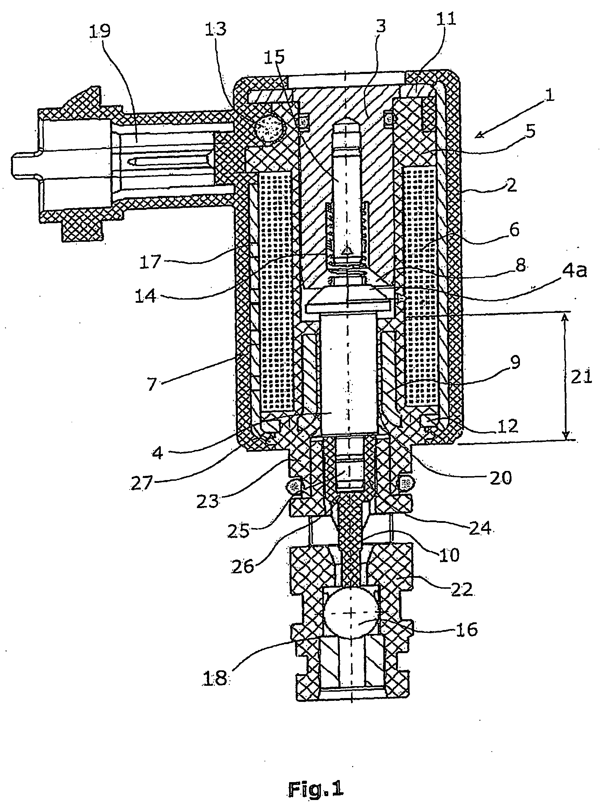

Figur 1 zeigt ein erfindungsgemäßes Elektromagnetventil 1 in einer Schnittansicht, das als Öldruckbegrenzungsventil eingesetzt wird. Dieses Elektromagnetventil 1 besteht aus einem Gehäuse 2, in dem ein Kern 3, ein Ankerteil 4, ein Spulenträger 5, auf den eine Spule 6 gewickelt ist, und eine Rückschlussanordnung 7 angeordnet sind. Das Ankerteil 4 ist im vorliegenden Fall über eine Steckverbindung 24 mit einem Stößelteil 10 verbunden, der auf bekannte Weise auf ein Ventilverschlussglied 16 einwirkt. Dabei läuft das Stößelteil 10 in einer Ventilhülse 22, die in einer an dem Kern 3 entgegengesetzten Seite des Spulenträgers 5 ausgebildeten Aufnahmebuchse 23 eingesetzt ist, wobei die Aufnahmebuchse 23 einstückig mit dem Spulenträger 5 verbunden ist.

Ein derartiges, von der Funktionsweise her bekanntes Elektromagnetventil funktioniert wie folgt: Im nicht bestromten Zustand steht zwischen dem Ankerteil 4 und dem Kern 3 ein Spalt 8, in den bei Bestromen der Spule 6 ein magnetisches Feld erzeugt wird, welches eine Axialbewegung des Ankerteils 4 zur Folge hat. Entsprechend wird auch das mit dem Ankerteil 4 verbundene Stößelteil 10 bewegt und das Ventilverschlussglied 16 frei gegeben.

Im vorliegenden Ausführungsbeispiel ist ein Rückschlussinnenabschnitt 9, einteilig mit dem vom Kern 3 abgewandten Rückschlussdeckelabschnitt 12 ausgeführt und im Spulengehäuse 5 integriert angeordnet. Dabei wurden die Rückschlussinnen- und -deckelabschnitte 9, 12 bei der Herstellung des Spulenträgers 5 im Spritzgussverfahren mit eingegossen. Des Weiteren wurde bereits ein Endstörwiderstand 13 im Spulenträger 5 integriert vorgesehen. Auf diese Weise können wesentliche Bauteile während der Vormontage im Spulenträger 5 vorgesehen werden. Bei der Herstellung eines Standardspulenbauteiles muss dann lediglich die für die Ventilfunktion ausgewählte Wicklung 6 ausgewählt werden und auf den Spulenträger 5 aufgebracht werden. Nachdem der zweite Rückschlussdeckelabschnitt 11 angeordnet und der Rückschlussseitenabschnitt 17 derart in eine Pressverbindung mit den Rückschlussdeckelabschnitten 11, 12, gebracht, dass ein elektromagnetischer Kreis herstellbar ist und die Kontaktierung mit einem Elektrostecker 19 vorgenommen wurde, wird das Elektromagnetventil 1 durch Umspritzung mit dem Außengehäuse 2 fertig gestellt. Hierbei wird zwischen dem Außengehäuse 2 und dem Spulenträger 5 eine Kontur vorgesehen, die eine Art labyrinthförmige Abdichtung 27 schafft, um die Dichtwirkung gegenüber der Atmosphäre zu erhöhen.

Im vorliegenden Fall wird das Elektromagnetventil dann durch das Anordnen von Kern 3, Ankerteil 4 und den zugehörigen Bauteilen wie einer Feder 14, die im vorliegenden Fall das Ankerteil 4 unter Vorspannung hält, sowie einem Anschlagstift 15, der einstellbar im Kern 3 angeordnet ist, fertiggestellt. Hierbei ist es für die Positionierung hilfreich, wenn sowohl ein vom Ankerteil 4 entgegengesetzter Bereich des Kernes 3 einen größeren Durchmesser aufweist als ein dem Ventilverschlussglied 16 entgegengesetzter Bereich des Spulenträgers 5.

Im vorliegenden Ausführungsbeispiel werden Lagermittel 20 für das Ankerteil 4 durch den Spulenträger 5 gebildet, wobei der Lagerbereich 21 im Wesentlichen mit dem Bereich übereinstimmt, in dem der Rückschlussinnenabschnitt 9 vorgesehen sind. Diese Ausführungsform wir dadurch ermöglicht, dass ein erstes, zum Kern gerichtetes Teilstück 4a des Ankerteils 4 einen größeren Durchmesser aufweist, als der Innendurchmesser eines Teilbereiches 21 des Spulenträgers 5. Neben des großen Montagevorteils ergibt sich hierdurch der Vorteil, dass der Lagerbereich 21 des Spulenträgers 5 durch das Einbringen des Rückschlussinnenabschnittes 9 zwangsläufig verstärkt ist. Durch das Aufbringen einer Gleitschicht im Lagerbereich 21 ist ein möglichst widerstandsfreies Gleiten des Ankerteils 4 im Spulenträger gewährleistet. Die koaxiale Führung des Ankerteils 4 im Elektromagnetventil ist durch die Doppelfunktion des Spulenkörpers 5, der einerseits den Kern 3 aufnimmt und andererseits als Lagermittel für das Ankerteil 6 fungiert, gewährleistet. Es ist natürlich auch möglich eine nicht weiter dargestellte Lagerbuchse im Bereich 21 vor zu sehen.

Zur Endmontage muss dann lediglich das für die Ventilfunktion ausgewählte Stößelteil 10 auf das Ankerteil 4 aufgesteckt werden, so dass eine Steckverbindung 24 hergestellt ist. Hierzu weist das Ankerteil 4 einen Zapfen 25 auf der in eine Aussparung 26 des Ventilstössels 10 einsteckbar ist und damit kraft- oder formschlüssig mit diesem verbunden ist. Dabei kann der Zapfen 25 noch eine nicht weiter dargestellte Rändelung besitzen durch die die Hubhöhe einstellbar ist. Im vorliegenden Ausführungsbeispiel wird das Stößelteil 10 zusammen mit der Ventilhülse 22 in der Endmontage montiert.

Dadurch, dass in diesem Fall ein Teil des Spulenträgers 5 als Aufnahmebuchse 23 für die Ventilhülse 22 ausgebildet ist, können Koaxialitätsfehler vermindert werden. Es hat sich als vorteilhaft erwiesen, dass der Spulenträger 5 aus einem form- und temperaturstabilen Werkstoff, beispielsweise unter dem Markenzeichen Grivory HT2V 3HLV, Grivory XE388, PPA oder PA 4.6, hergestellt ist.

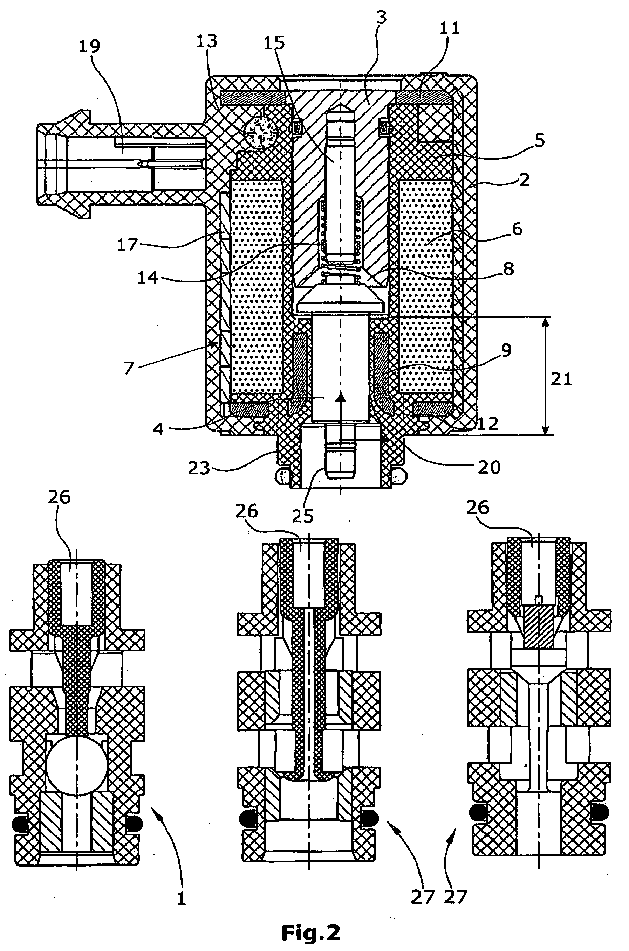

Figur 2 zeigt nun schematisch eine Baugruppenzeichnung für verschiedene Elektromagnetventile, die durch einfaches Zusammenstecken und nachfolgendes Verbinden Aufnahmebuchse 23 und Ventilhülse 22, beispielsweise durch ein Schweißverfahren, herzustellen sind. So handelt es sich im linken unteren Teil der Figur 2 in Kombination mit dem oberen Teil der Figur 2 um das aus Figur 1 bekannte Druckbegrenzungsventil 1. Der mittlere untere Teil der Figur 2 in Kombination mit dem oberen Teil der Figur 2 ergibt ein 3/2 Schieberventil 27 und rechte untere Teil der Figur 2 in Kombination mit dem oberen Teil der Figur 2 ergibt ein Sitzventil 28.

## Patentansprüche

1. Elektromagnetventil mit einem Gehäuse (2), in dem eine auf einen Spulenträger (5) gewickelte Spule (6), eine Anker-Stößel-Anordnung, ein Kern (3) und eine mehrteilige Rückschlussanordnung (7) angeordnet sind, die einen elektromagnetischen Kreis bilden, wobei die Anker-Stößel-Anordnung (4, 10) mindestens ein Ankerteil (4) und ein Stößelteil (10) aufweist und die bewegliche Anker-Stößel-Anordnung (4, 10) über Lagermittel (20) in dem Spulenträger (5) gelagert ist und auf mindestens ein Ventilverschlussglied (16) direkt oder indirekt einwirkt, wobei das Ventilverschlussglied (16) auf mindestens einen, in einer Ventilhülse (22) angeordneten Ventilsitz (18) angreift, wobei das Ankerteil (4) über Lagermittel im Spulenträger (5) gelagert ist und das Stößelteil (10) in der Ventilhülse (22) beweglich angeordnet ist, wobei das Ankerteil (4) und das Stößelteil (10) über eine Steckverbindung (24) miteinander verbindbar sind, **dadurch gekennzeichnet, dass** der Spulenträger (5) als Aufnahmebuchse (23) für die Ventilhülse (22) ausgebildet ist, wobei die Ventilhülse (22) zusammen mit dem Stößelteil (10) in die Aufnahmebuchse (23) einsetzbar ist.

2. Elektromagnetventil nach Anspruch 1, **dadurch gekennzeichnet, dass** das Ankerteil (4) einen Zapfen (25) und das Stößelteil (10) eine mit dem Zapfen (25) korrespondierende Aussparung (26) aufweist, derart, dass eine kraft- oder formschlüssige Verbindung herstellbar ist.

3. Elektromagnetventil nach Anspruch 1 oder 2, **dadurch gekennzeichnet, dass** die Steckverbindung (24) in Axialrichtung einstellbar ist.

4. Elektromagnetventil nach Ansprüche 2 und 3, **dadurch gekennzeichnet, dass** der Zapfen (25) eine Rändelung aufweist.

5. Elektromagnetventil nach einem der vorhergehenden Ansprüche, **dadurch gekennzeichnet, dass** zumindest Teile (9, 12) der Rückschlussanordnung (7) im Spulenträger angeordnet sind.

6. Elektromagnetventil nach Anspruch 1 oder 2, **dadurch gekennzeichnet, dass** ein vom Ankerteil (4) entgegengesetzter Bereich des Kernes (3) einen größeren Durchmesser aufweist, als ein dem Ventilverschlussglied (16) entgegengesetzter Bereich des Spulenträgers (5).

7. Elektromagnetventil nach einem der vorhergehenden Ansprüche, **dadurch gekennzeichnet, dass** ein Teilbereich (21) des Spulenträgers (5) eine Lagerbuchse (20) für das Ankerteil (4) aufweist.

8. Elektromagnetventil nach einem der Ansprüche 1 - 6, **dadurch gekennzeichnet, dass** der Teilbereich (21) des Spulenträgers (5) als Lagerbereich (20) für das Ankerteil (4) ausgebildet ist.

9. Elektromagnetventil nach einem der vorhergehenden Ansprüche, **dadurch gekennzeichnet, dass** der Spulenträger (5) im Spritzgussverfahren hergestellt ist.

10. Elektromagnetventil nach einem der vorherigen Ansprüche, **dadurch gekennzeichnet, dass** der Spulenträger (5) aus einem form- und temperaturstabilen Werkstoff, beispielsweise unter dem Markenzeichen Grivory HT2V-3H LF oder Grivory XE3881, hergestellt ist.

## Claims

1. Solenoid valve having a housing (2), in which a coil (6) which is wound onto a coil former (5), an armature/plunger arrangement, a core (3) and a multiple-part return-path arrangement (7) are arranged, which form an electromagnetic circuit, wherein the armature/plunger arrangement (4, 10) has at least one armature part (4) and one plunger part (10), and the movable armature/plunger arrangement (4, 10) is mounted in the coil former (5) via bearing means (20) and acts directly or indirectly on at least one valve closure element (16), wherein the valve closure element (16) acts on at least one valve seat (18) which is arranged in a valve sleeve (22), wherein the armature part (4) is mounted in the coil former (5) via bearing means and the plunger part (10) is arranged movably in the valve sleeve, wherein the armature part and the plunger part (10) are connected to one another via a plug connection (24),
**characterized in that**
the coil former (5) is formed as a receiving bush (23) for the valve sleeve (22), wherein the valve sleeve (22) is adapted to be inserted into the receiving bush (23) together with the plunger part (10).

2. Solenoid valve of claim 1, **characterized in that** the armature part (4) has a pin (25) and the plunger part (10) has a recess (26) corresponding to the pin (25) such that a force-fit or a form-fit connection can be established.

3. Solenoid valve of claim 1 or 2, **characterized in that** the plug connection (24) is adjustable in the axial direction.

4. Solenoid valve of claims 2 and 3, **characterized in that** the pin (25) has a knurling.

5. Solenoid valve of one of the preceding claims, **characterized in that** at least parts (9, 12) of the return-path arrangement (7) are arranged in the coil former.

6. Solenoid valve of claim 1 or 2, **characterized in that** a part of the core (3) opposite the armature part (4) has a larger diameter than a part of the coil former (5) opposite the valve closure element (16).

7. Solenoid valve of one of the preceding claims, **characterized in that** a portion (21) of the coil former (5) comprises a bearing bush (20) for the armature part (4).

8. Solenoid valve of one of claims 1 - 6, **characterized in that** the portion (21) of the coil former (5) is configured as a bearing portion (20) for the armature part (4).

9. Solenoid valve of one of the preceding claims, **characterized in that** the coil former (5) is formed using an injection molding process.

10. Solenoid valve of one of the preceding claims, **characterized in that** the coil former (5) is formed from a dimensionally and temperature stable material such as under the trademarks Grivory HT2V-3H LF or Grivory XE3881, for example.

## Revendications

1. Électrovanne avec un carter (2) dans lequel sont disposés une bobine (6) enroulée sur un support de bobine (5), un ensemble armature-poussoir, un noyau (3) et un ensemble de retour de flux (7) réalisé en plusieurs parties, formant un circuit électromagnétique, ledit ensemble armature-poussoir (4, 10) comprenant au moins un élément armature (4) et un élément poussoir (10) et ledit ensemble armature-poussoir (4, 10) mobil étant supporté dans le support de bobine (5) par des moyens de support (20) et agissant directement ou indirectement sur au moins un organe obturateur de vanne (16), ledit organe obturateur de vanne (16) s'applique sur au moins une siège de soupape (18) disposée dans une douille de soupape (22), ledit élément armature (4) étant supporté dans le support de bobine (5) par des moyens de support et l'élément poussoir (10) étant disposé de manière mobile dans la douille de soupape (22), ledit élément armature (4) et ledit élément poussoir (10) pouvant être raccordé l'un à l'autre par une connexion enfichable (24), **caractérisée en ce que** le support de bobine (5) est réalisé comme douille réceptrice (23) pour la douille de soupape (22), la douille de soupape (22) pouvant être insérée dans la douille réceptrice (23) avec l'élément poussoir (10).

2. Électrovanne selon la revendication 1, **caractérisée en ce que** l'élément armature (4) présent une goupille (25) et l'élément poussoir (10) présent un renfoncement (26) correspondant à la goupille (25) de sorte que l'on peu réaliser une liaison par serrage ou par complémentarité de formes.

3. Électrovanne selon la revendication 1 ou 2, **caractérisée en ce que** la connexion enfichable (24) est réglable dans la direction axiale.

4. Électrovanne selon les revendications 2 et 3, **caractérisée en ce que** la goupille (25) présente un moletage.

5. Électrovanne selon l'une quelconque des revendications précédentes, **caractérisée en ce qu'**au moins des parties (9, 12) de l'ensemble de retour de flux (7) sont disposées dans le support de bobine.

6. Électrovanne selon la revendication 1 ou 2, **caractérisée en ce qu'**une partie du noyau (3) opposée à l'élément armature (4) a un diamètre plus grand que celui d'une partie du support de bobine (5) opposée à l'organe obturateur de soupape (16).

7. Électrovanne selon l'une quelconque des revendications précédentes, **caractérisée en ce qu'**une région partielle (21) du support de bobine (5) comprend une douille de support (20) pour ledit élément armature (4).

8. Électrovanne selon l'une quelconque des revendications 1 - 6, **caractérisée en ce que** la région partielle (21) du support de bobine (5) est réalisée comme région de support (20) pour ledit élément armature (4).

9. Électrovanne selon l'une quelconque des revendications précédentes, **caractérisée en ce que** le support de bobine (5) est fabriqué par moulage par injection.

10. Électrovanne selon l'une quelconque des revendications précédentes, **caractérisée en ce que** le support de bobine (5) est fabriqué d'une matière résistante à la déformation et thermostable, pour exemple sous la marque Grivory HT2V-3H LF ou Grivory XE3881.
